# EUROPEAN PATENT APPLICATION

(11) **EP 1 501 003 A2**
(43) Date of publication of application: **26.01.2005**
(21) Application number: 04011093.4
(22) Date of filing: 10.05.2004
(51) Int. Cl.: G06F 1/16

(54) **Apparatus, systems and methods relating to an improved media player**

(30) Priority: 30.05.2003 US 474686 P; 27.02.2004 US 788812
(71) Applicant: MICROSOFT CORPORATION, Redmond, WA 98052 (US)
(72) Inventor: Proctor, David W., Bellevue WA 98005 (US); Cerceo, Michael, Seattle WA 98102 (US); Udiyan Llanjeran Padmanabhan, Redmond WA 98052 (US); Godee Joost, Palo Alto, California 94301 (US); Burton Maximillian Philip, New York, New York 10012 (US)
(74) Representative: Grünecker, Kinkeldey, Stockmair & Schwanhäusser Anwaltssozietät

(57) **Abstract**

Apparatus, systems and methods for enabling an improved portable media player are provided. The apparatus provides improved media recording, synchronization, rendering and user interface experiences for a user. In various embodiments, portable media players are provided with a closed position for substantially protecting the media screen when music is being played, and an open position which uncovers the media screen for the viewing of video, photos, movies and the like. For instance, there is provided a portable media player with a small screen with a dual-sided cover spreading outward to reveal a large screen with wings on either side. User Interface controls may be located on the wings, and the functionality may be augmented or replaced with swappable, interchangeable wings offering cartridge like replaceable functionality. In one embodiment, a touch pad user interface component is provided substantially in the form of an arc, such as a quarter circle, which facilitates the discovery and navigation of media.

## Description

### CROSS REFERENCE TO RELATED APPLICATION

The present application claims the benefit of U.S. Provisional Patent Appln. No. 60/474,686, filed May 30, 2003.

### FIELD OF THE INVENTION

The present invention is directed to an improved portable media apparatus and corresponding methods that provide an improved media recording, synchronization, rendering and user interface experience for a user.

### BACKGROUND

More and more, consumers around the world are discovering, downloading, managing and playing back digital photos, music and movies on their computers. There is a need, though, for a new generation of smart portable media players (commonly referred to as PMPs) that make a user's favorite content from the user's computer available to the user, wherever located, whenever wanted.

A typical portable media player is a device about the size of a book that can play audio and video files as well as display photos. Such a device may have an independent processor, a reasonably sized hard drive and a small color display, e.g., RGB. USB and wireless LAN (WLAN) technology are generally made available to transfer data from a PC. In this regard, first-generation digital portable devices have offered basic PC synchronization features and enabled consumers to take limited amounts of media to go.

Portable media players are thus handheld personal media players that enable entertainment on the go by providing consumers with an easy and complete solution to download, store and play back all their favorite digital media content including video, music and photos.

In this regard, there is a need for an improved design that facilitates not only the playback of music, but also the rendering of video and photos, and for easy switching between the two modes. There is a further need for a design that enables and facilitates the viewing of the media screen when in video content viewing mode, but which protects the media screen when the user is merely listening to music. There is a further need for a design that enables a partial view of the media screen for the display of metadata, advertising or the like, while continuing to protect the media screen. There is additionally a need for the ability to enhance or augment the functionality of a portable media player by providing swappable, i.e., interchangeable, and/or augmentable components as part of the integrated design. There is further a need for an improved user interface for a portable media player that facilitates the user's discovery and rendering of media according to the user's desires.

### SUMMARY OF THE INVENTION

Apparatus, systems and methods for enabling an improved portable media player are provided. The apparatus provides improved media recording, synchronization, rendering and user interface experiences for a user. In various embodiments, portable media players are provided with a closed position for substantially protecting the media screen when music is being played, and an open position which uncovers the media screen for the viewing of video, photos, movies and the like. For instance, there is provided a portable media player with a small screen with a dual-sided cover spreading outward to reveal a large screen with wings on either side. User Interface controls may be located on the wings, and the functionality may be augmented or replaced with swappable, interchangeable wings offering cartridge like replaceable functionality.

Other features and embodiments of the present invention are described below.

### BRIEF DESCRIPTION OF THE DRAWINGS

The systems and methods for providing an improved portable media player in accordance with the present invention are further described with reference to the accompanying drawings in which:
Figure 1A is a block diagram representing an exemplary network environment having a variety of computing devices to which the various embodiments of the portable media player of the present invention may be connected or synchronized;
Figure 1B is a block diagram representing an exemplary non-limiting computing device in connection with which the portable media player of the invention may be synchronized;
Figure 2 illustrates various exemplary embodiments of the portable media player of the invention;
Figures 3A to 3D illustrate a roller design embodiment with a roller/scroller user interface component in accordance with the invention;
Figures 4A to 4C illustrate a wallet design embodiment of the invention;
Figures 5A to 5D illustrate a theatre design embodiment with a synchronization component that can be utilized in any of the embodiments of the invention;
Figures 6A to 6D illustrate various additional embodiments of the portable media player of the invention;
Figures 7A to 7C illustrate exemplary usage scenarios for the portable media player embodiments of the invention; and
Figures 8A to 8E illustrate exemplary user interface controls for the various embodiments of the portable media player of the invention.

### DETAILED DESCRIPTION OF ILLUSTRATIVE EMBODIMENTS

### Overview

As mentioned, the invention provides apparatus, systems and methods for enabling an improved portable media player. In various embodiments, the invention includes: (1) improved user interface and associated software, (2) structural advantages nowhere found in the prior art and (3) augmentable functionality to suit a user's needs and desires in connection with a personalized and customizable media experience.

### Exemplary Networked and Distributed Environments

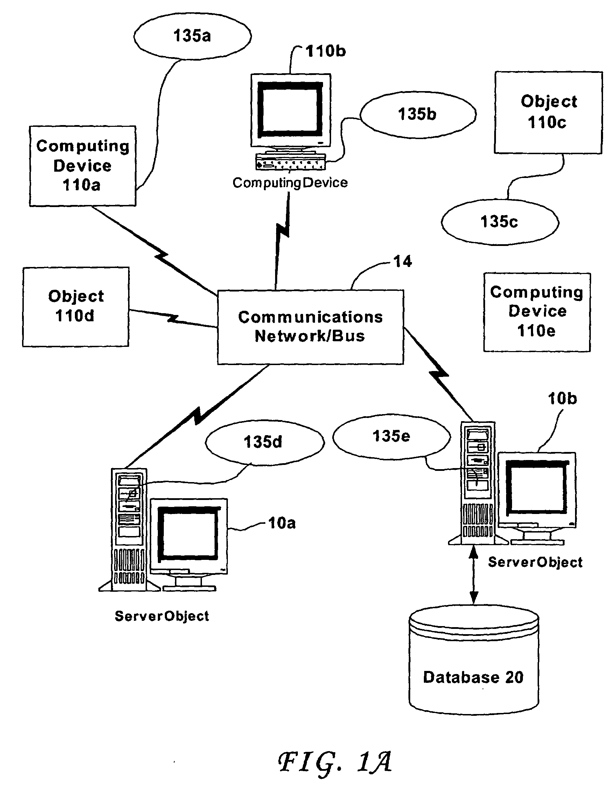

Fig. 1A provides a schematic diagram of an exemplary networked or distributed computing environment. The distributed computing environment comprises computing objects 10a, 10b, etc. and computing objects or devices 110a, 110b, 110c, etc. These objects may comprise programs, methods, data stores, programmable logic, etc. The objects may comprise portions of the same or different devices such as PDAs, televisions, MP3 players, televisions, personal computers, personal media players, etc. Each object can communicate with another object by way of the communications network 14. This network may itself comprise other computing objects and computing devices that provide services to the system of Fig. 1A. In accordance with an aspect of the invention, each object 10a, 10b, etc. or 110a, 110b, 110c, etc. may contain an application that might make use of an API, or other object, software or hardware, that interacts with the portable media player of the invention, or media on any of the other devices in the network.

It can also be appreciated that an object, such as 110c, may be hosted on another computing device 10a, 10b, etc. or 110a, 110b, etc. Thus, although the physical environment depicted may show the connected devices as computers, such illustration is merely exemplary and the physical environment may alternatively be depicted or described comprising various digital devices such as PDAs, televisions, MP3 players, etc., software objects such as interfaces, COM objects and the like.

There are a variety of systems, components, and network configurations that support distributed computing environments. For example, computing systems may be connected together by wired or wireless systems, by local networks or widely distributed networks. Currently, many of the networks are coupled to the Internet, which provides the infrastructure for widely distributed computing and encompasses many different networks.

In home networking environments, there are at least four disparate network transport media that may each support a unique protocol, such as Power line, data (both wireless and wired), voice (e.g., telephone) and entertainment media. Most home control devices such as light switches and appliances may use power line for connectivity. Data Services may enter the home as broadband (e.g., either DSL or Cable modem) and are accessible within the home using either wireless (e.g., HomeRF or 802.11b) or wired (e.g., Home PNA, Cat 5, even power line) connectivity. Voice traffic may enter the home either as wired (e.g., Cat 3) or wireless (e.g., cell phones) and may be distributed within the home using Cat 3 wiring. Entertainment media, or other graphical data, may enter the home either through satellite or cable and is typically distributed in the home using coaxial cable. IEEE 1394 and DVI are also used as digital interconnects for clusters of media devices. All of these network environments and others that may emerge as protocol standards may be interconnected to form an intranet that may be connected to the outside world by way of the Internet, and a user may interact with all of the user's media through such an intranet, or beyond. In short, a variety of disparate sources exist for the storage and transmission of data, and consequently, moving forward, computing devices will require ways of sharing data, such as data accessed or utilized incident to program objects or media objects, which may be utilized in connection with the portable media player(s) of the present invention.

Thus, Fig. 1A illustrates an exemplary networked or distributed environment, with a server in communication with client computers via a network/bus, of which the portable media player of the invention may take advantage to access and share media. In more detail, a number of servers 10a, 10b, etc., are interconnected via a communications network/bus 14, which may be a LAN, WAN, intranet, the Internet, etc., with a number of client or remote computing devices 110a, 110b, 110c, 110d, 110e, etc., such as a portable computer, handheld computer, thin client, networked appliance, or other device, such as a VCR, TV, oven, light, heater and the like in accordance with the present invention. It is thus contemplated that the present invention may apply to any computing device in connection with which it is desirable to interact with media of any kind.

In a network environment in which the communications network/bus 14 is the Internet, for example, the servers 10a, 10b, etc. can be Web servers with which the clients 110a, 110b, 110c, 110d, 110e, etc. communicate via any of a number of known protocols such as HTTP. Servers 10a, 10b, etc. may also serve as clients 110a, 110b, 110c, 110d, 110e, etc., as may be characteristic of a distributed computing environment. Communications may be wired or wireless, where appropriate. Client devices 110a, 110b, 110c, 110d, 110e, etc. may or may not communicate via communications network/bus 14, and may have independent communications associated therewith. For example, in the case of a TV or VCR, there may or may not be a networked aspect to the control thereof. Each client computer 110a, 110b, 110c, 110d, 110e, etc. and server computer 10a, 10b, etc. may be equipped with various application program modules or objects 135 and with connections or access to various types of media storage elements or objects, across which files may be stored or to which portion(s) of media files may be downloaded or migrated. Any computer 10a, 10b, 110a, 110b, etc. may be responsible for the maintenance and updating of a database 20 or other media storage element in accordance with the present invention, such as a database or memory 20 for storing media data processed, extracted or rendered according to the invention. Thus, the present invention can be utilized in a computer network environment having client computers 110a, 110b, etc. that can access and interact with a computer network/bus 14 and server computers 10a, 10b, etc. that may interact with client computers 110a, 110b, etc. and other like devices, and databases 20.

### Exemplary Computing Device

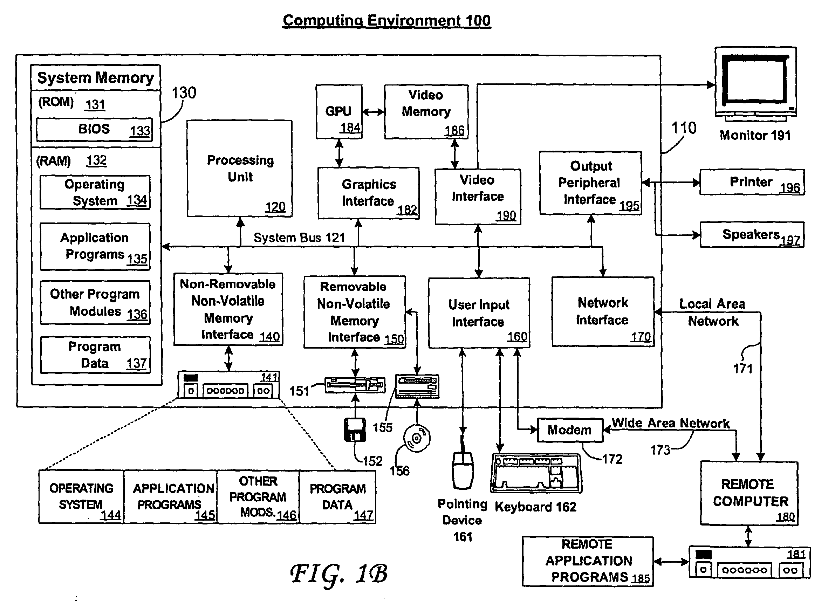

Fig. 1B and the following discussion are intended to provide a brief general description of a suitable computing environment in connection with which the invention may be used. It should be understood, however, that handheld, portable and other computing devices and computing objects of all kinds are contemplated for use in connection with the present invention. While a general purpose computer is described below, this is but one example. The present invention may be implemented in an environment of networked hosted services in which very little or minimal client resources are implicated, e.g., a networked environment in which the client device serves merely as an interface to the network/bus, such as an object placed in an appliance. In essence, anywhere there is a computing device or peripheral that includes media objects, such as photos, movies, video or audio of any kind, can benefit from the techniques of the invention. Any such place is thus a desirable, or suitable, environment for operation of the techniques of the invention.

Although not required, any software used with the invention can be implemented via an operating system, for use by a developer of services for a media device or object, and/or included within application software that operates in connection with the portable media player of the invention, or provided within the portable media player itself. Software may be described in the general context of computer-executable instructions, such as program modules, being executed by one or more computers, such as client workstations, servers or other devices. Generally, program modules include routines, programs, objects, components, data structures and the like that perform particular tasks or implement particular abstract data types. Typically, the functionality of the program modules may be combined or distributed as desired in various embodiments. Moreover, those skilled in the art will appreciate that the invention may be practiced with other computer system configurations and protocols. Other well known computing systems, environments, and/or configurations that may be suitable for use with the invention include, but are not limited to, personal computers (PCs), automated teller machines, server computers, hand-held or laptop devices, multi-processor systems, microprocessor-based systems, programmable consumer electronics, network PCs, appliances, lights, environmental control elements, minicomputers, mainframe computers and the like. The invention may also be practiced in distributed computing environments where tasks are performed by remote processing devices that are linked through a communications network/bus or other data transmission medium. In a distributed computing environment, program modules may be located in both local and remote computer storage media including memory storage devices, and client nodes may in turn behave as server nodes.

Fig. 1B thus illustrates an example of a suitable computing system environment 100 in connection with which the invention may be utilized, although as made clear above, the computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

With reference to Fig. 1B, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium which can be used to store desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Fig. 1B illustrates operating system 134, application programs 135, other program modules 136, and program data 137.

The computer 110 may also include other removable/non-removable, volatile/nonvolatile computer storage media. By way of example only, Fig. 1B illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CDROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Fig. 1B provide storage of computer readable instructions, data structures, program modules and other data for the computer 110. In Fig. 1B, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A graphics interface 182, such as Northbridge, may also be connected to the system bus 121. Northbridge is a chipset that communicates with the CPU, or host processing unit 120, and assumes responsibility for accelerated graphics port (AGP) communications. One or more graphics processing units (GPUs) 184 may communicate with graphics interface 182. In this regard, GPUs 184 generally include on-chip memory storage, such as register storage and GPUs 184 communicate with a video memory 186, wherein the application variables of the invention may have impact. GPUs 184, however, are but one example of a coprocessor and thus a variety of coprocessing devices may be included in computer 110, and may include a variety of procedural shaders, such as pixel and vertex shaders. A monitor 191 or other type of display device is also connected to the system bus 121 via an interface, such as a video interface 190, which may in turn communicate with video memory 186. In addition to monitor 191, computers may also include other peripheral output devices such as speakers 197 and printer 196, which may be connected through an output peripheral interface 195.

The computer 110 may operate in a networked or distributed environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Fig. 1B. The logical connections depicted in Fig. 1B include a local area network (LAN) 171 and a wide area network (WAN) 173, but may also include other networks/buses. Such networking environments are commonplace in homes, offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Fig. 1B illustrates remote application programs 185 as residing on memory device 181. It will be appreciated that the network connections shown are exemplary and other means of establishing a communications link between the computers may be used.

In one aspect of the invention, most of the above-described PC architecture is conceptually thought of as the computing device with which the invention interacts to retrieve media objects, and thus much of the below described functionality focuses on the various designs of the personal media player of the invention.

### Apparatus, Systems and Methods for Providing an Improved Portable Media Player

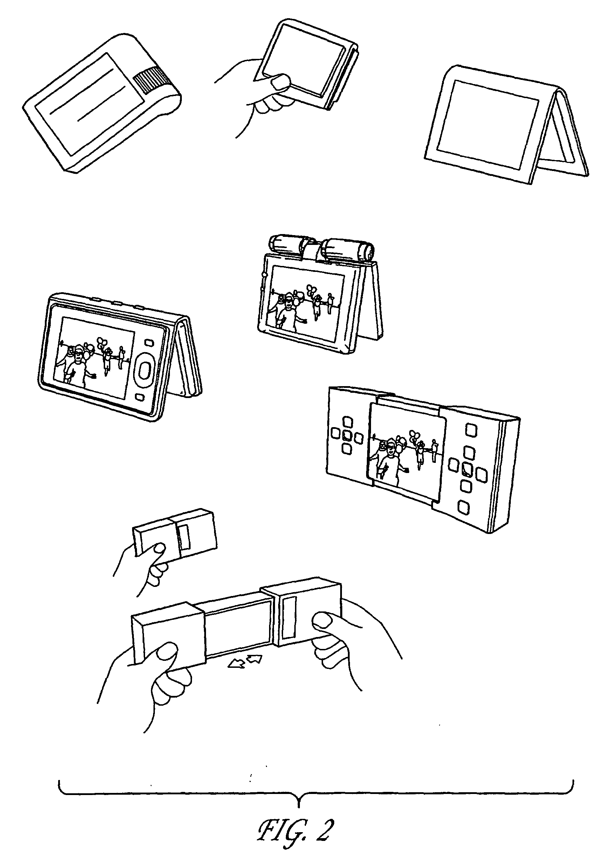

Apparatus, systems and methods for enabling an improved portable media player are provided in accordance with the invention. The portable media player of the invention is designed to provide a compact package, integrated screen protection, a personalized feel, environmental suitability to playing sound versus watching video/pictures (e.g., standing, holding and carrying), a perceptional viewing angle when standing and a logical component layout for ease of user interface. In various embodiments, the invention includes portable media player designs including a roller design, a wallet design and a theatre design. Each of these concepts is depicted in Fig. 2.

The wallet design is functionally depicted by the upper two right pictures, wherein in the left of those pictures, a hand is holding the "wallet" closed and in the right picture, the wallet sits on a surface, partially opened, to give the user a view of the small screen on the front. Advantageously, when the wallet is closed, the small video screen is protected. Another view in operation is displayed as the middle left design picture of Fig. 2. The wallet design provides a design from the inside out, giving a very flexible usage model. The design includes a soft-hard contrast as between the wallet material and the video screen, for instance, provides built in screen protection, and is self standing as a result of an elastomeric hinge. The wallet design includes an integrate cover "from the inside out" instead of adding a cover as an addition. The combination of hard and soft materials provides a nice feeling aesthetic to a user. The outside, when closed, reveals very little about the product as a theft deterrent. The soft elastomeric hinge, allows for multiple positions on the table, lap, or any other environment as well.

The roller design, in two separate embodiments is depicted in the upper left of Fig. 2, and also in the middle below the black and white wallet design drawings. Similar to the wallet design, when the roller pivots, the screen can be angled to the user's desire. Advantageously, the roller design gives the user not only pivoting abilities with the rollers, but also user interface control, by turning the rollers, by sliding the rollers about their longitudinal axes, or by pressing buttons on the ends of the rollers. The roller design provides a generally clamshell design, an input focused design, machined material fell, screen protection and self standing capabilities. The roller design includes optimal input rollers for navigation and transport controls, wherein the buttons are clustered. The roller portable media player hinges around the input rollers/input scrollers. In one embodiment, a design is implemented that looks somewhat similar to a jewel box, optionally machined in aluminum or molded magnesium.

The theatre design is depicted in the bottom three pictures of Fig. 2, open in the top and bottom of the three, and closed in the middle of the three. Advantageously, the slidable "wings" of the theatre design enable several advantages including functional augmentation of the device, protection of the video screen, while leaving some video screen available for other display purposes even when the wings are closed. When set down on the table, the theatre design is angled for optimal viewing, and buttons on the "wings" of the device give natural input capabilities to a user holding the device. The theatre design provides a desirably small package, a surprise opening for the display of additional information, a hard outside, soft inside user experience, a maximum grip area because the wings of the device slide, but do not give up space by folding or retracting, inherent screen protection and a self standing angled view of the device and media screen when placed on a surface. With the theatre design, a focus is placed on minimizing the visual elements, in order to maximize the visual entertainment experience and consumer allure. The device has a curve towards the user to emphasize the personal cinema experience by placing the user at the center of the curved experience. The theatre design includes enclosure by the wings that expose a hint of the media screen, allowing a user, for instance, to receive feedback about music playing while the device is in the closed position. Large grip areas (i.e., the wings) are provided for handling the device, solving a typical challenge between devices that are horizontally versus vertically oriented. Additionally, because the wings slide together and meet in a secure fashion, the device possesses a secure feel when the device is closed.

### The Roller Design

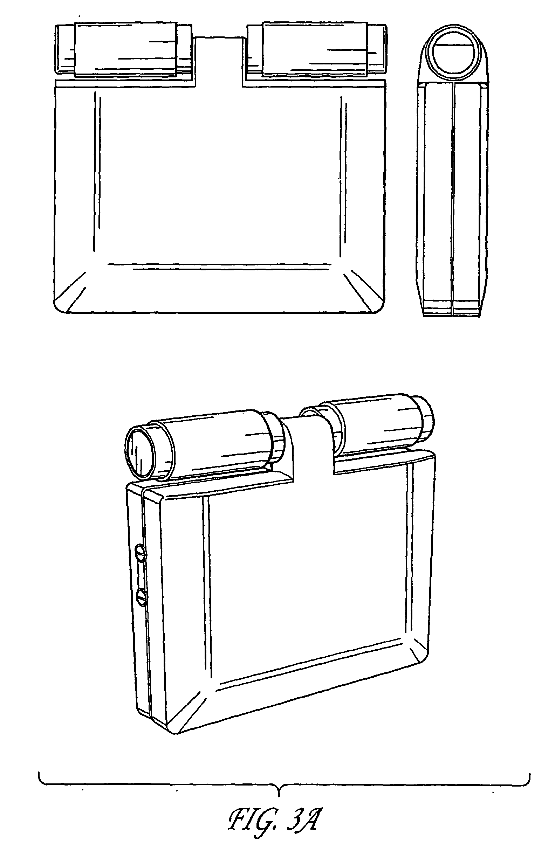

An embodiment of the roller design is depicted in Figs. 3A to 3D. Beginning clockwise from the upper left, Fig. 3A includes front, side and perspective views of an embodiment of the roller design, each in the closed position. One can observe that the video screen is protected in the closed position, and that the rollers on top of the portable media player provide an enhanced user interface mechanism. In addition to operating as a pivot point, the rollers provide three substantially different user input mechanisms: (1) rolling a roller about its rotational axis in either direction provides up to four separate input controls, namely right one clockwise, right one counterclockwise, left one clockwise and left one counterclockwise, (2) sliding a roller along its longitudinal axis in either direction provides up to four separate input controls, namely, sliding the right roller towards the center of the device, sliding the right roller away from the center of the device, sliding the left roller towards the center of the device and sliding the left roller away from the center of the device and (3) buttons on the end of the rollers, which if optionally divided into an upper button and a bottom button each, also provide up to four separate input controls. In the closed position, the roller design of the portable media player provides a variety of audio options. In the open position (see below), the portable media player provides a variety of video and photo options as well.

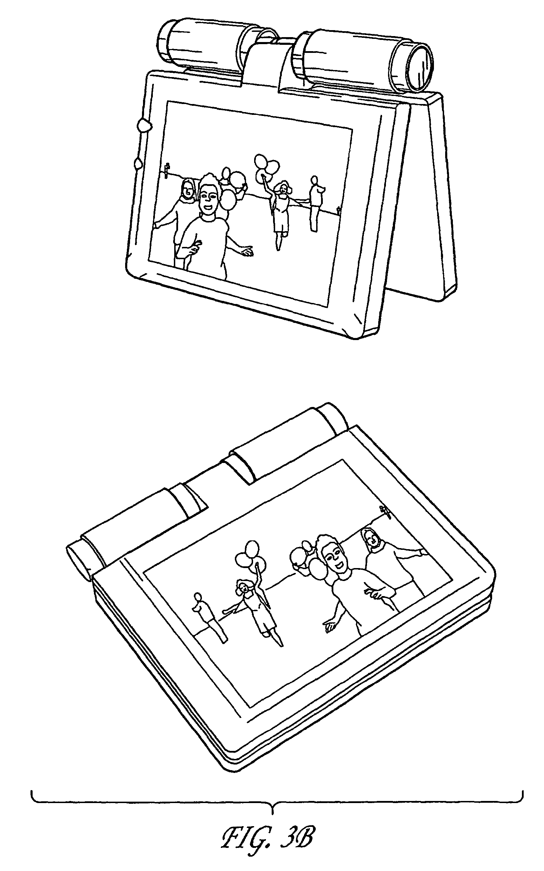

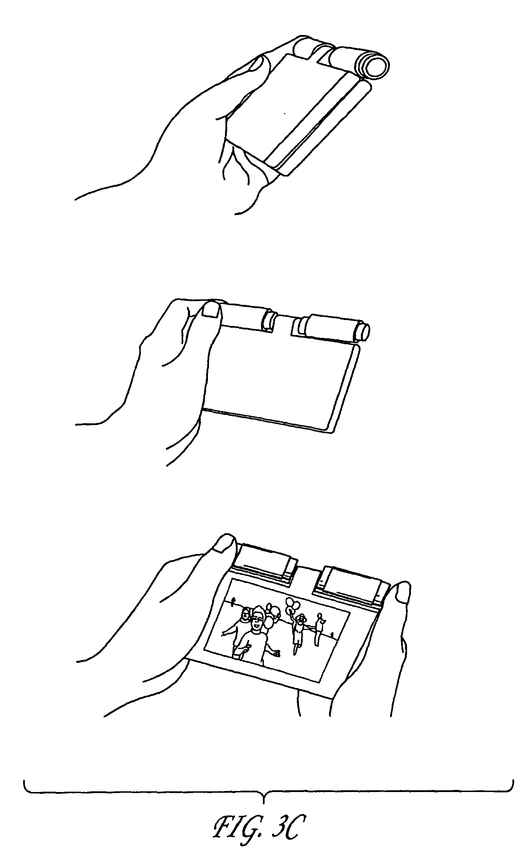

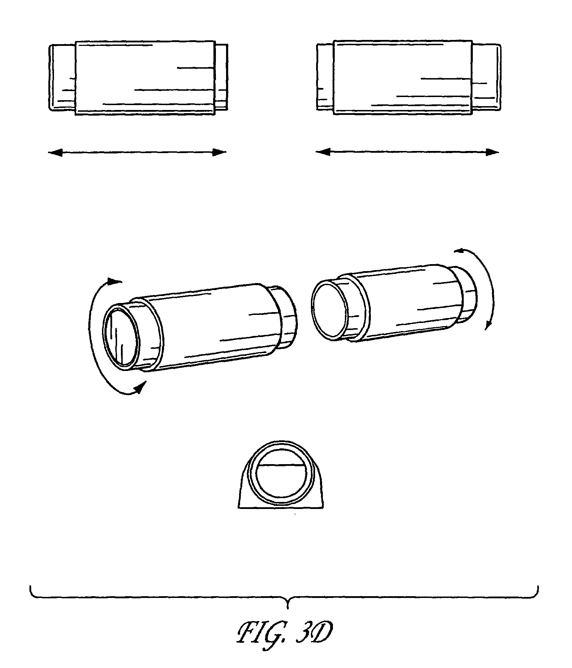

Fig. 3B illustrates the roller design of the portable media player of the invention in two separate open positions. In the first on the top, one might imagine viewing one's favorite movie or the like while the device lay on a table, angled optimally by the roller pivot point for viewing. At the same time, as illustrated by the bottom picture, one might imagine viewing one's favorite movie or the like while the device was completely open, so that one might hold the device at the right viewing angle, e.g., if a user was on an airplane or another place where placing the device on a surface was sub-optimal. Thus, the roller design provides a variety of viewing options for a user desiring to watch video.

Fig. 3C illustrates a three step sequence wherein, in the first top frame, a user holds the roller design in the closed position, perhaps because the user is listening to music. Then, in the middle frame, the user decides to use the functional controls of the roller design, either to change the music the user is listening to, or to get ready to open the portable media player to view video. In the bottom frame, a user holds the roller design in the open position and is able to easily view photos or videos, and control the viewing with the user's thumbs which naturally are positioned at the controls through the act of holding the portable media player.

Fig. 3D illustrates an isolated view of the roller/scroller components of the roller design to illustrate the combinational functionality represented thereby. For instance, in the top view, one can see that with two degrees of freedom, i.e., sliding a roller left or right along its longitudinal cylindrical axis and choosing to slide the left or right roller, a user is afforded four user inputs. In one embodiment, sliding a roller away from the center of the portable media player has the opposing functional effect to sliding the roller towards the center of the portable media player, e.g., fast forward v. reverse functionality. In the middle perspective view, one can see that the rollers once again offer two additional degrees of freedom, i.e., turning a roller clockwise or counterclockwise and choosing to turn either the left or right roller. Once again, this offers the user four additional user inputs with the same rollers/scrollers. In one embodiment, turning a roller clockwise has the opposing functional effect to turning the roller counterclockwise. Lastly, in the side bottom view, one can see that the ends of the roller include user interface controls, e.g., buttons. In the embodiment shown, two buttons are placed on the end of each roller, but any number of user interface controls (0, 1, 2, 3...) can be placed on the ends to the extent a satisfying user interface experience can be delivered to the user.

### The Wallet Design

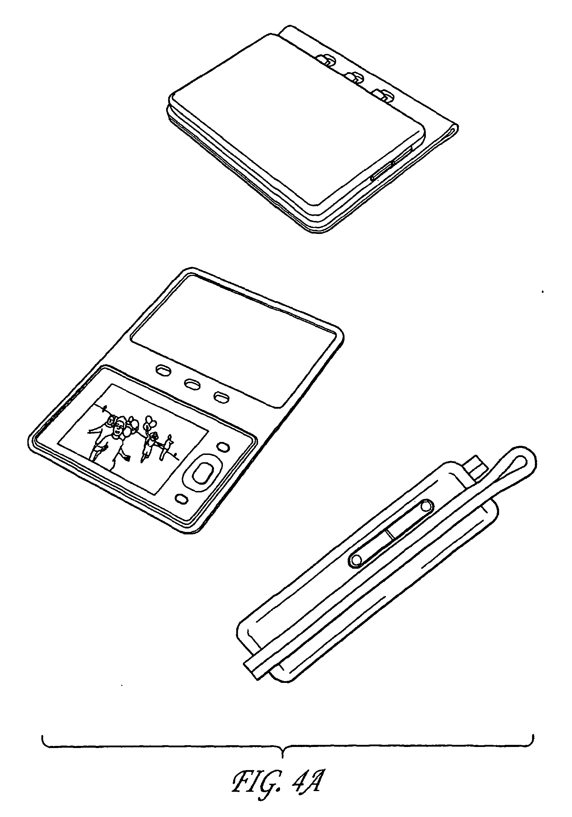

An embodiment of the wallet design is depicted in Figs. 4A to 4C. Beginning clockwise from the upper left, Fig. 4A includes closed perspective, open perspective and a closed side view of an embodiment of the wallet design. One can observe that the video screen is protected in the closed position, and that the wallet has side and top buttons for control in the closed position, and enhanced controls in the open position. Such enhanced controls include a scalloped, or dish-like button which is shaped for ergonomic fitting with a user's thumb. In the closed position, the wallet design of the portable media player provides a variety of audio options. In the open position, the portable media player provides a variety of video and photo options as well.

Fig. 4B illustrates the wallet design of the portable media player of the invention in two separate open positions. Similar to the roller design, in the top view, one might imagine viewing one's favorite movie or the like while the device lay on a table, angled optimally by the wallet pivot point for viewing. At the same time, as illustrated by the bottom picture, one might imagine viewing one's favorite movie or the like while the device was completely open, so that one might hold the device at the right viewing angle, e.g., if a user was on an airplane or another place where placing the device on a surface was sub-optimal. Thus, the wallet design provides a variety of viewing options for a user desiring to watch video and photos.

Fig. 4C illustrates a three step sequence wherein, in the first top frame, a user holds the wallet design in the closed position, perhaps because the user is listening to music. Then, in the middle frame, the user decides to use the functional controls of the wallet design, either to change the music the user is listening to, or to get ready to open the portable media player to view video. In the bottom frame, a user holds the wallet design in the completely open position and is able to easily view photos or videos, and control the viewing with the user's thumbs which are naturally positioned at the controls through the act of holding the portable media player.

### The Theatre Design

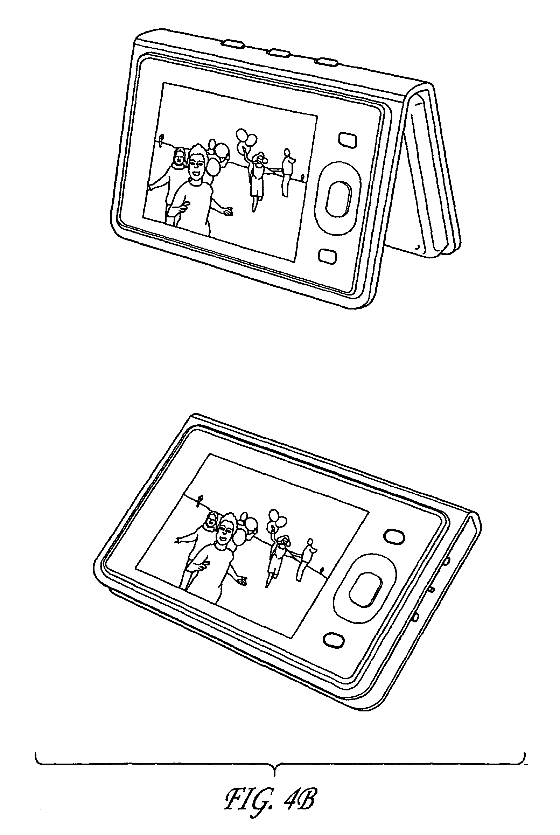

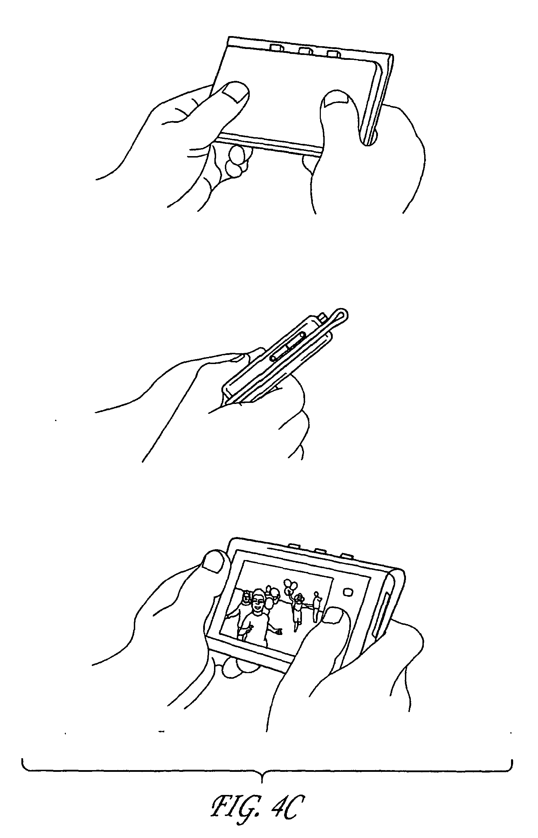

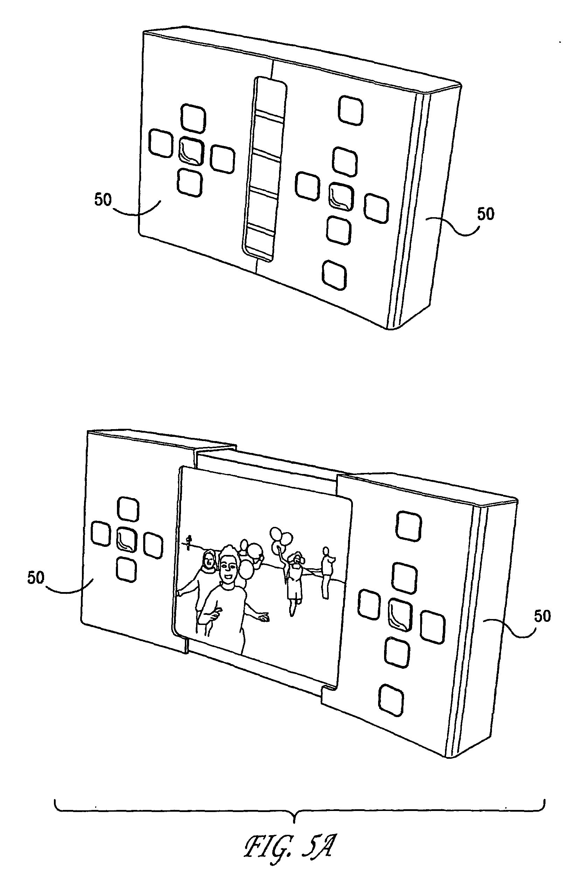

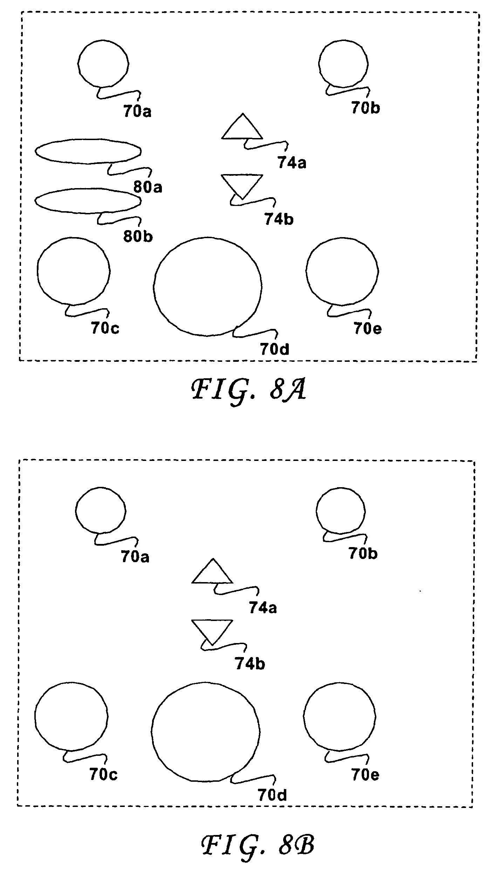

An embodiment of the theatre design is depicted in Figs. 5A to 5D. Fig. 5A includes a closed perspective of the theatre design (top) and an open perspective (bottom). One can observe that the media screen is protected by wings 50 in the closed position, although a small portion of the media screen remains visible to a user for auxiliary display information, such as details relating to the music being played. In an embodiment of the invention where the media screen is a touch pad screen, the media screen itself can become a user interface control point, wherein the portion(s) of the media screen that are nonetheless exposed when the wings 50 are closed can have functionality associated with input regions defined by software underlying the touch screen media screen. Also, while exemplary button controls are illustrated in the disclosed theatre embodiment, a variety of user interface controls are contemplated for the various design embodiments presented herein (See, e.g., below with respect to Figs. 8A to 8E). In the closed position, the theatre design of the portable media player provides a variety of audio options. In the open position, the portable media player provides a variety of video and photo options as well.

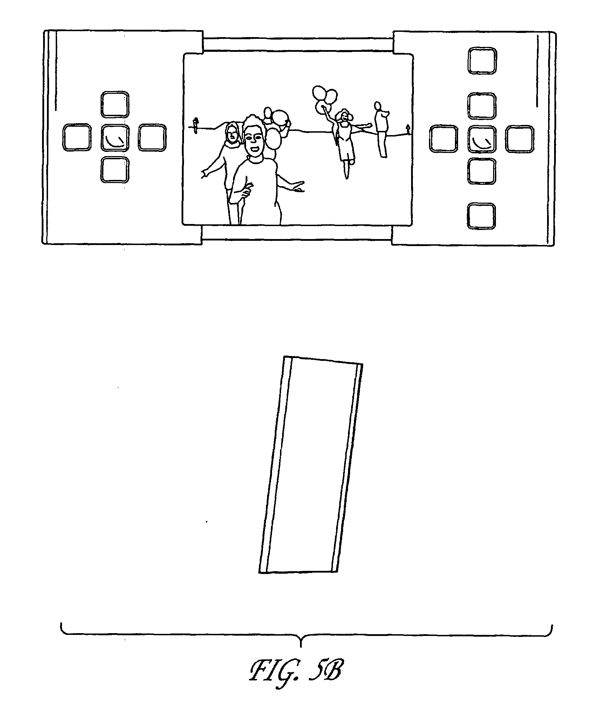

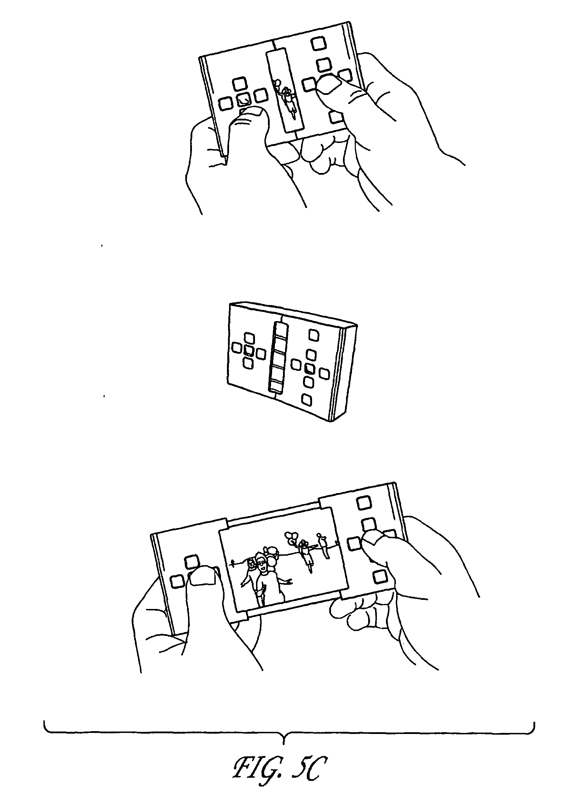

Fig. 5B illustrates a front and side view of the theatre design of the portable media player of the invention in two separate open positions. The theatre design accommodates one's wish to view one's favorite movie or the like while the device lays on a table by angling the bottom surface between 5 and 45 degrees for viewing. In one embodiment, the bottom surface is angles the device's media screen back away from the user by an angle of between 5 and 15 degrees.

Fig. 5C illustrates a three step sequence wherein, in the first top frame, a user holds the theatre design in the closed position, perhaps because the user is listening to music. Then, in the middle frame, the user decides to place the device down on a table, perhaps because the user is listening to music via a remote control device. In the bottom frame, a user holds the theatre design in the completely open position and is able to easily view photos or videos, and control the viewing with the user's thumbs which are naturally positioned at the controls through the act of holding the portable media player. Thus, as illustrated by the bottom picture, one might imagine viewing one's favorite movie or the like while the device was completely open, so that one might hold the device at the right viewing angle, e.g., if a user was on an airplane or another place where placing the device on a surface was sub-optimal. In this regard, wings 50 advantageously behave as the stand for the device as well. Thus, the theatre design provides a variety of viewing options for a user desiring to watch video and photos.

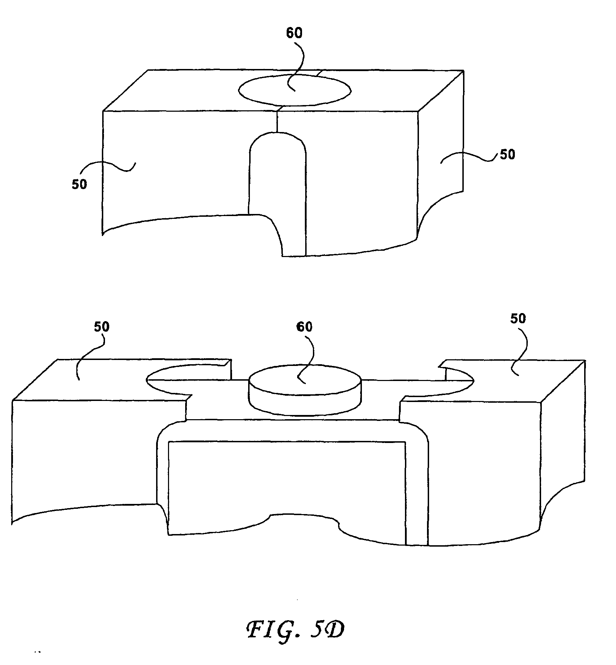

Fig. 5D illustrates a synchronization component on the theatre design that can be accommodated in any of the embodiments of the personal media player disclosed herein. In this regard, when the device is in the closed position (top picture), substantially just the surface of synchronization component 60 is exposed. Since the surface is all that is needed to dock and synchronize the portable media player to an alternate computing device, such as a PC, the portable media player can be docked when wings 50 are in the closed position (or when the roller design is closed, or when the wallet design is closed, etc.). Additionally, as reflected by the bottom picture of Fig. 5D, the portable media player can also be docked and synchronized when the device is in the open position, e.g., when wings 50 are open (or when the roller design is open, or when the wallet design is open, etc.). Since synchronization component 60 is even more exposed when the portable media player is in the open position, the portable media player can be docked and synchronized when opened as well. Synchronization component 60 could be located on the top or the bottom of the portable media player, wherever it makes sense to fit into the docking component design that will accommodate the docking of the portable media player with other computing devices.

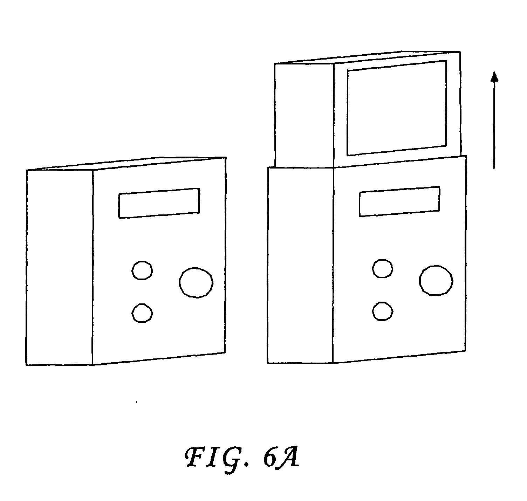

Figs. 6A to 6D illustrate additional embodiments of the portable media player of the present invention having a closed (audio) position protecting the media screen and an open (video + audio) position. For instance in Fig. 6A, a Jack in the Box design is illustrated (e.g., an altered theatre design having one wing), wherein the user interface controls are placed on the outside cartridge, and when the user desires, the user initiates a control to have the media screen slide out of the outside cartridge. Like the theatre design described above, the outside cartridge may possess the swappable or interchangeable characteristics, and thus the functionality of the device may be supplemented or replaced. The bottom of the outside cartridge may be angled for viewing optimality and the screen is protected when the device is in the closed position.

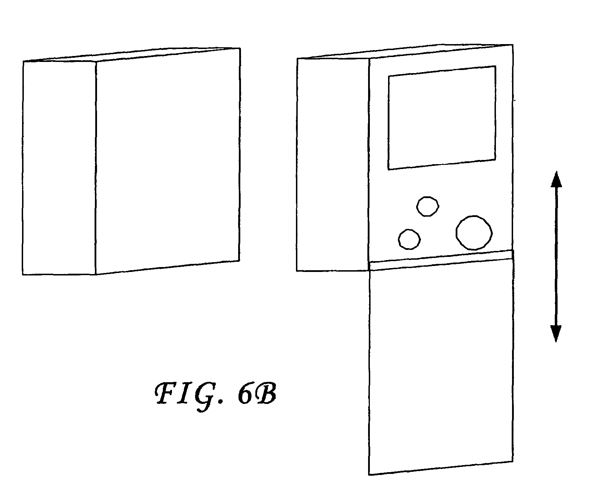

Fig. 6B illustrates a similar embodiment wherein a sliding door protects the media screen. While in this embodiment the user interface controls are depicted inside on the surface co-located with the media screen, the user interface controls can also be located on the sliding door itself. Additionally, the sliding door may behave as a remote control for the device. Like the other embodiments, the screen is protected when the door is shut, and the screen may be angled for viewing purposes via the angle of the bottom surface.

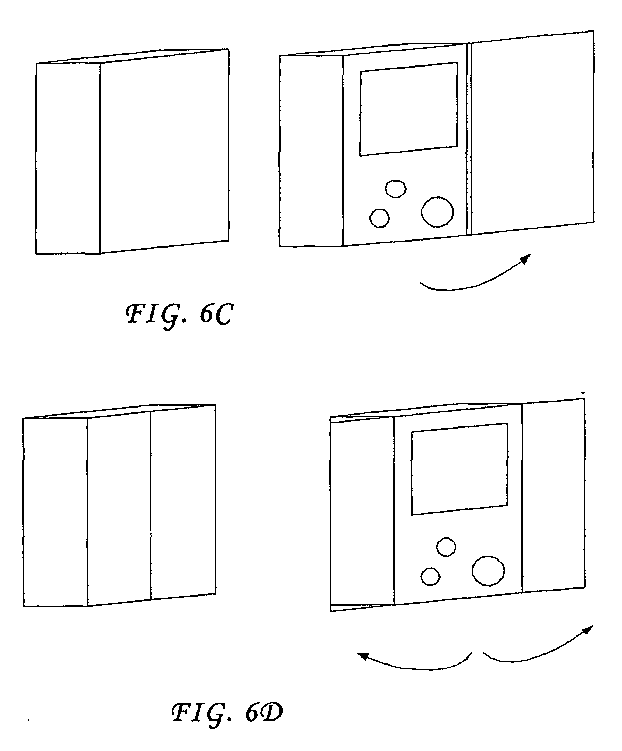

Figs. 6C and 6D are embodiments similar to Fig. 6B wherein instead of a sliding door, one or two hinged doors are provided to open or close to make apparent or protect the media screen. As with Fig. 6B, the location of the user interface controls in the exemplary Figures are non-limiting in that the controls can be located on the surface with the media screen, on the door(s) of the device, or on any other portion of the portable media player as well. Like the other embodiments, the screen is protected when the door is shut, and the screen may be angled for viewing purposes via the angle of the bottom surface.

### Cartridge Interchangeability

Any of the embodiments described herein that include a cartridge, or sleeve, or other removable component may benefit from the augmentation of functionality for the portable media player. For instance, with respect to the theatre design that includes wings 50 that the user may hold while viewing video to secure and control the device via user interface controls located on the wings 50, the wings 50 may be interchangeable with other wings 50 to swap or augment functionality. For instance, it may be desirable for a left handed person to have the user interface controls normally associated with the left and right wings to be located with the right and left wings, respectively, to accommodate a preference for dominant hand use. Wings 50 also provide a cosmetic effect as well depending on their design, and thus different cosmetic effects can be achieved by swapping or interchanging sleeves.

The alternate functionality of a portable media player that may be achieved in accordance with the invention can be achieved either by removing a wing 50 and replacing it with another wing 50 with an alternate set of functionality, or by attaching a sleeve to an existing wing 50 which augments the functionality of the existing wing 50. Further examples of alternate functionality that may be achieved or provided through interchangeability/augmentation other than left/right switching and cosmetic differentiation includes the provision of a wing 50 or sleeve that includes a speaker, the provision of a wing 50 or sleeve that includes a TV out (or in) component or microphone input, the provision of a wing 50 or sleeve that includes noise reduction/cancellation circuitry, and/or the provision of a wing 50 or sleeve that includes accommodation for a Bluetooth headphone. Moreover, a wing 50 or sleeve may also behave as a detachable remote control device. A sleeve may be a sliding plate face, a wrapping component, or any other device that attaches to wing 50 and accordingly augments the functionality of the portable media player to which it is attached.

### Exemplary Usage Scenarios

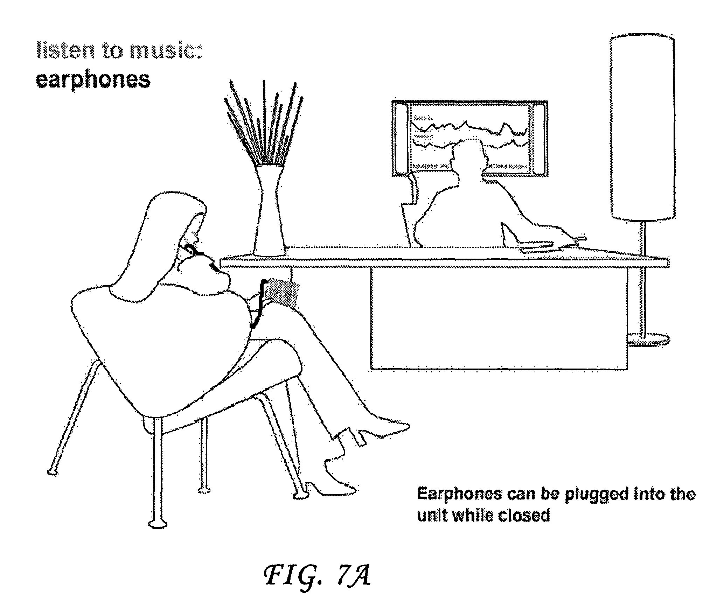

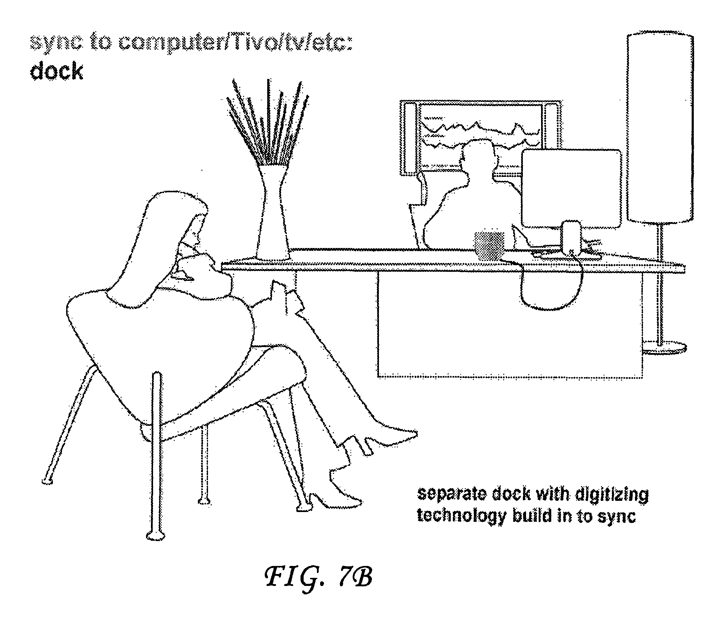

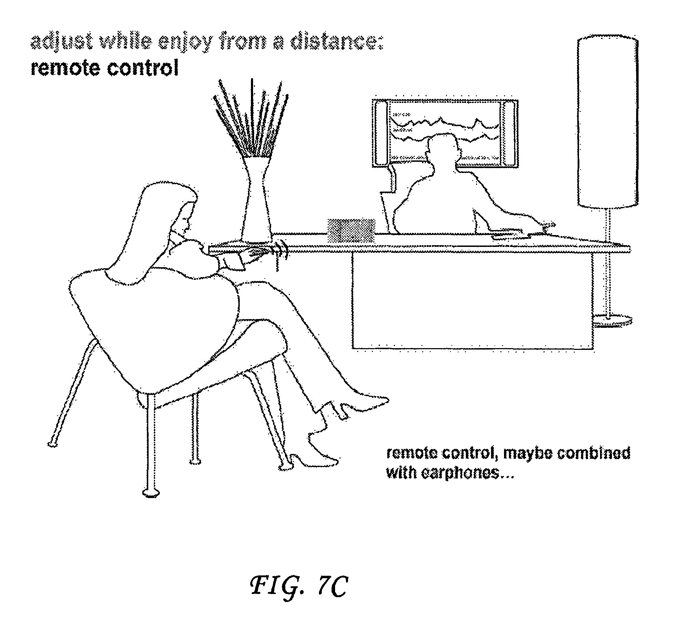

Figs. 7A to 7C illustrate various usage scenarios of the present invention. The devices are provided with a docking station including capabilities for different types of connections to various computing objects and devices, such as a PC. Accessories include a remote control device and earphones. Fig. 7A illustrates that earphones can be plugged into the unit to hear audio, such as music, but can also be used to hear the audio component of a video rendering. Fig. 7B illustrates that a separate dock with digitizing technology is built into an embodiment of the synchronization component of the invention (See, e.g., Fig. 5D). Fig. 7C illustrates that a user can control various functionality of the portable media player from a distance via a remote control, ranging from synchronization control to rendering of media. For instance, a wing of the theatre design of Figs. 5A to 5D may be removed and operate as a remote control and the sliding door of Fig. 6B can be removed to operate as a remote control. Other embodiments can have a removable remote control portion as well. Moreover, a remote control separate from the portable media player itself can be provided for the purpose of providing remote control services.

### Exemplary User Interface Controls

Figs. 8A to 8E illustrate exemplary user interface controls for the various embodiments of the portable media player of the present invention, wherever they are located on the device. In this regard, exemplary non-limiting control functionality for a portable media player of the invention may include: "Escape," "Start," "Options," "More," "OK," "Back," "Forward," "Play," Pause," "Up," "Down," "Fast Forward," "Reverse," "Skip Forward," "Skip backwards," "Menu," "Left," "Right," "Mute," "Volume Up," "Volume Down," preset(s) for specialized functionality and/or any combination or permutation of these controls (e.g., play and pause are often combined with a single control).

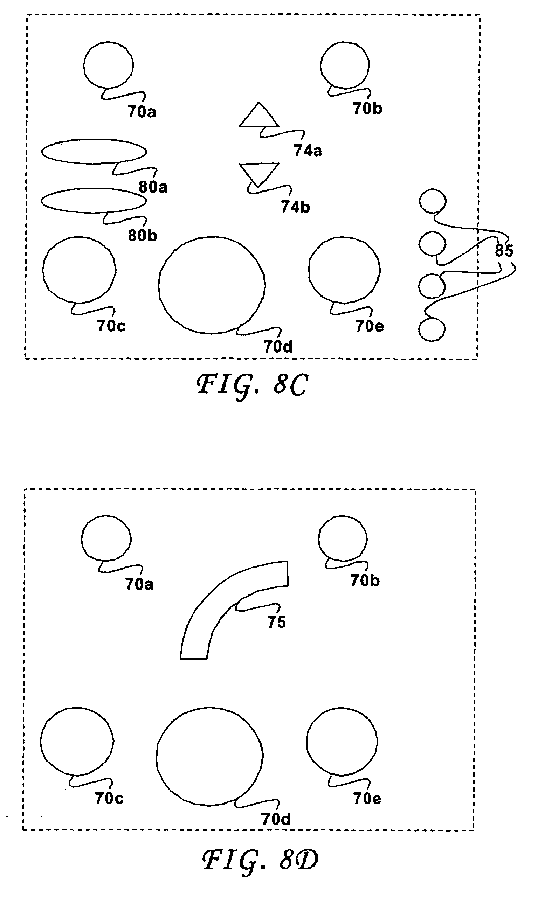

Fig. 8A illustrates a user interface control set including up and down controls 74a and 74b for facilitation of navigation, various buttons 70a, 70b, 70c, 70d, 70e, etc. for typical media functionality and buttons 80a, 80b, etc. for less standard media player functionality, such as "options," "more," etc. Fig. 8B illustrates a variation on the user interface control set of Fig. 8A without the optional media player functionality. Fig. 8C illustrates another variation on the user interface control set of Fig. 8A, which further includes one or more preset buttons 85 for the provision of specialized preset functionality, such as functionality that is uncommon, a particularly unique combination of typical functionalities, or functionality that is particular to the embodiment of portable media player. Fig. 8D is yet another variation of a user interface control set wherein a substantially arc shaped touch pad control 75 is provided which provides an enhanced user experience for navigation and media control.

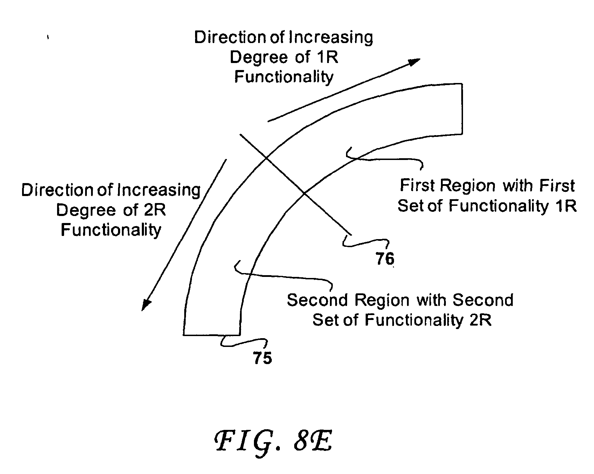

Fig. 8E illustrates the functionality of an embodiment of the substantially arc shaped touch pad control 75 in more detail. One can appreciate that due to the sweeping, radial movement of a thumb or other substantially longitudinally oriented input device, the arc shaped control provides an enhanced user interface experience and ergonomic solution to the awkward input control problem for a user who is holding and simultaneously controlling any of the various portable media players disclosed herein. In more detail, arc 75 is divided into two regions of control, substantially about the center 76 of the arc. A first set of functionality is associated with the first region 1R and a second set of functionality is associated with the second region 2R. In another embodiment, a tap to the arced touch pad 75 is given special functional meaning. In another embodiment, a tap to the first region 1R is given a first functional meaning and a tap to the second region 2R is given a second functional meaning.

In one embodiment, the first set of functionality (and second set of functionality) has one functional purpose for each functionality of the set, but the difference from functionality from functionality within the set lies in the degree of functional purpose. For instance, all of the functionalities of the first set of functionality might represent "up" functionality, but the difference from functionality to functionality lies in how much "up" is effected. Similarly, all of the functionalities of the second set of functionality might represent "down" functionality, but the difference from functionality to functionality lies in how much "down" is effected. In one embodiment, this is achieved with a measure of how far user input is from the center 76. For instance, one embodiment works as follows: the farther the user input is from center line 76 in the first region 1R, the greater the degree of "up" that is applied whereas the closer the user input is to the center line 76 in the first region 1R, the less the degree of "up" that is applied; similarly, the farther the user input is from center line 76 in the second region 2R, the greater the degree of "down" that is applied whereas the closer the user input is to the center line 76 in the second region 2R, the less the degree of "down" that is applied. The direction of increasing functionality illustrated can optionally be reversed to the direction of decreasing functionality, and the use of "up" and "down" was for exemplary purposes only. Generally, the control is suited for any two opposing sets of functionality such as "up and down," "in and out", "left and right," volume up and volume down," "forward and reverse," "skip forward and skip backward," and so on, although the invention is not limited to two sets of opposing functionality.

In one embodiment, the user interface touchpad control substantially in the shape of an arc is a user interface touchpad control substantially in the shape of a quarter circle. Thus, a user interface touchpad control is provided that is substantially in the shape of an arc comprising a first region for first touchpad input and a second region for second touchpad input, wherein the first region is divided by the second region substantially via the center of the arc. In another embodiment, the user interface control comprises a touch pad arc divided into a first region of control providing a first set of functionality and a second region of control providing a second set of functionality different from the first set of functionality, wherein the first and second regions are divided substantially about the orthogonal center line of the arc. As mentioned, the user interface control may have the first set of functionality provide a set of functionality opposite to the second set of functionality. For example, in the illustrative embodiment, the first set of functionality includes varying degrees of "up" functionality and the second set of functionality includes varying degrees of "down" functionality. In this regard, the farther from the center line the touch pad arc receives input in the first region, the greater the degree of functionality of the first set of functionality is provided and the farther from the center line the touch pad arc receives input in the second region, the greater the degree of functionality of the second set of functionality is provided.

Also, it can be appreciated that there is underlying software functionality to a capacitive touch pad or the like wherein a computer readable medium having computer executable instructions for providing control support to a touch pad arc in accordance with the invention may comprise a detection component for detecting where touch pad input of a touch pad arc is received, whereby the touch pad arc is divided into a first region and a second region substantially about the orthogonal center line of the touch pad arc and an output component for outputting a functional result, whereby if input is received in the first region, a functional result of a first set of functional results is output by the output component, and whereby if input is received in the second region, a functional result of a second set of functional results is output by the output component.

### Design Embodiments

One can appreciate that design drawings emphasize and deemphasize claim scope by dashing certain lines and leaving other lines solid. For expedience, all of the permutations and combinations of dashed lines and undashed lines of all of the designs of the portable media player of the invention and all of permutations and combinations of dashed lines and undashed lines of the designs of the user interface control embodiments have not been included herein because of the sheer numerosity of such permutations and combinations. For instance, all of the buttons and controls illustrated in Figs. 8A to 8E would take hundreds of Figures to demonstrate the various combinations of controls that are deemed inventive from a design perspective. Moreover, the wings, the open and closed state of the theatre embodiment alone could also receive numerous figures illustrating the interesting dashed and undashed versions.

Thus, while the present application intends for all aspects of the disclosed designs from narrow features to larger picture to be preserved, the invention includes at a minimum, design embodiments with dashed lines (for de-emphasis) and solid lines (for emphasis) for emphasizing the roller(s) of the roller embodiment, the elastometric material in each of the embodiment(s), the wings and overall design of the theatre embodiment, the synchronization component implementation, the Jack in the Box design and corresponding designs with doors, the wallet design, and all user interface configurations, including, but not limited to the substantially arc shaped user interface control 75, and any combination of the elements recited in this sentence as well. Subelements, considered alone, of these identified elements have innovative design features as well, and thus subelements and subfeatures, permutations and combinations thereof, also form part of the design elements of the invention.

There are multiple ways of implementing code that may be used incident to the present invention, e.g., an appropriate API, tool kit, driver code, operating system, control, standalone or downloadable software object, etc. which enables applications and services to use and exploit the improved hardware provided by the invention. The invention contemplates the use of the invention from the standpoint of an API (or other software object), as well as from a software or hardware object that communicates in connection with data generated or used incident to the portable media player(s) of the invention. Thus, various implementations of the invention described herein may have aspects that are wholly in hardware, partly in hardware and partly in software, as well as in software.

As mentioned above, while exemplary embodiments of the present invention have been described in connection with various computing devices and network architectures, the underlying concepts may be applied to any computing device or system for which it is desirable to dock and synchronize with a portable media player. For instance, any peripheral or computing device can take advantage of the docking and synchronization capabilities of the portable media player(s) of the invention, and the algorithm(s) and hardware implementations used in connection with such docking and synchronization of the invention may be applied to the operating system of a computing device, provided as a separate object on the device, as part of another object, as a reusable control, as a downloadable object from a server, as a "middle man" between a device or object and the network, as a distributed object, as hardware, in memory, a combination of any of the foregoing, etc. While exemplary programming languages, names and examples are chosen herein as representative of various choices, these languages, names and examples are not intended to be limiting. One of ordinary skill in the art will appreciate that there are numerous ways of providing object code and nomenclature that achieves the same, similar or equivalent functionality achieved by the various embodiments of the invention.

As mentioned, the various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that are used incident to docking, digitization and synchronization of a portable media player of the invention may make use of a data processing API, reusable controls, or the like, which are preferably implemented in a high level procedural or object oriented programming language to communicate with a computer system. However, the program(s) can be implemented in assembly or machine language, if desired. In any case, the language may be a compiled or interpreted language, and combined with hardware implementations.

Various aspects of the invention may also be practiced via communications embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, or a receiving machine having the signal processing capabilities as described in exemplary embodiments above becomes an apparatus for practicing the invention. When implemented on a general-purpose processor, the program code combines with the processor to provide a unique apparatus that operates to invoke the functionality of the present invention. Additionally, any storage techniques used in connection with the present invention may invariably be a combination of hardware and software.

While the present invention has been described in connection with the preferred embodiments of the various figures, it is to be understood that other similar embodiments may be used or modifications and additions may be made to the described embodiment for performing the same function of the present invention without deviating therefrom. For example, while exemplary network environments of the invention are described in the context of a networked environment, such as a peer to peer networked environment, one skilled in the art will recognize that the present invention is not limited thereto, and that the methods, as described in the present application may apply to any computing device, peripheral or environment, such as a gaming console, handheld computer, portable computer, etc., whether wired or wireless, and may be applied to any number of such computing devices connected via a communications network, and interacting across the network, wherever media is located. Furthermore, it should be emphasized that a variety of computer platforms, including handheld device operating systems and other application specific operating systems are contemplated, especially as the number of wireless networked devices continues to proliferate. Still further, the present invention may be implemented in or across a plurality of processing chips or devices, and storage may similarly be effected across a plurality of devices. Therefore, the present invention should not be limited to any single embodiment, but rather should be construed in breadth and scope in accordance with the appended claims.

## Claims

1. A user interface mechanism for switching among at least two modes in a media device having a media screen for displaying data relating to media content, modes of operation of the media device including a first mode for interacting with the media device when the media content relates to music and a second mode for interacting with the media content when the media content relates to image content, comprising:
at least one component movable between a first position corresponding to the first mode and a second position corresponding to the second mode, wherein when said at least one component is moved to the first position, the media screen of the media device is substantially shielded from view.

2. A user interface mechanism according to claim 1, wherein said image content of the second mode includes at least one of video content and image content.

3. A user interface mechanism according to claim 1, wherein when said at least one component is moved to the first position, a portion of the media screen remains unshielded from view.

4. A user interface mechanism according to claim 3, wherein the unshielded portion of the media screen displays at least one of metadata relating to music being rendered and advertising.

5. A user interface mechanism according to claim 1, wherein said at least one component includes a plurality of user interface controls for interacting with the media content.

6. A user interface mechanism according to claim 5, wherein said plurality of user interface controls for interacting with the media content include at least one of Escape, Start, Options, More, OK, Back, Forward, Play, Pause, Up, Down, Fast Forward, Reverse, Skip Forward, Skip Backwards, Menu, Left, Right, Mute, Volume Up and Volume Down functional controls.

7. A user interface mechanism according to claim 5, wherein said plurality of user interface controls is applicable to both the first and second modes.

8. A user interface mechanism according to claim 5, wherein said at least one component is swappable with at least one alternate component.

9. A user interface mechanism according to claim 8, wherein said at least one alternate component exposes a different set of user interface controls than provided by said at least one component.

10. A user interface mechanism according to claim 5, wherein said at least one component is augmentable with at least one alternate component.

11. A user interface mechanism according to claim 10, wherein said at least one alternate component at least one of (A) exposes additional user interface controls not provided by said at least one component alone and (B) alters the functionality of said plurality of user interface controls.

12. A user interface mechanism according to claim 1, wherein said at least one component includes a first component and a second component, wherein the first and second component substantially surround opposing ends of the media device, such that when the first and second components are moved substantially towards the middle of the media device from their respective ends, the media screen of the media device is substantially shielded and said at least one component is located at the first position.

13. A user interface mechanism according to claim 1, wherein said at least one component includes a first component and a second component, wherein the first and second components substantially surround opposing ends of the media device, such that when the first and second components are moved substantially away from the middle of the media device in the direction of their respective ends, the media screen of the media device is unshielded and said at least one component is located at the second position.

14. A user interface mechanism according to claim 1, wherein said at least one component includes a first component, wherein the first component substantially surrounds an end of the media device, such that when the first component is moved substantially towards the middle of the media device from the end, the media screen of the media device is substantially shielded and said at least one component is located at the first position.

15. A user interface mechanism according to claim 1, wherein said at least one component includes a first component, wherein the first component substantially surrounds an end of the media device, such that when the first component is moved substantially away from the middle of the media device in the direction of the end, the media screen of the media device is unshielded and said at least one component is located at the second position.

16. A user interface mechanism according to claim 1, wherein the media device includes a synchronization component adapted to synchronize with a docking station whether said at least one component is in the first position or the second position.

17. A user interface mechanism according to claim 1, wherein the at least one component include a first component including the media screen, at least one roller component and a second component, wherein said first component and said second component are pivotable about an axis substantially defined by the longitudinal axis of said at least one roller component, whereby with said at least one roller component, the media screen of the first component can be arbitrarily angled with respect to the second component.

18. A user interface mechanism according to claim 1, wherein the at least one component include a first component including the media screen, at least one roller component and a second component, wherein said at least one roller component substantially operates as a hinge for said first component and said second component about which the first and second component pivot, whereby said at least one roller component includes at least one user interface control that operates by at least one of (A) turning the at least one roller component substantially about a longitudinal axis of said at least one roller component, (B) sliding the at least one roller component substantially along the longitudinal axis and (C) receiving a selection of a button control on an end of the at least one roller component.

19. A user interface mechanism according to claim 1, wherein the at least one component include a wallet structure wherein the media screen is inside the wallet structure, such that the wallet structure is in the first position when the wallet structure is closed and the wallet structure is in the second position when the wallet structure is open.

20. A portable media player comprising:
a media screen;
at least one wing for substantially covering the media screen when the at least one wing is in the closed position, wherein the media screen is revealed when said at least one wing is in the open position.

21. A portable media player according to claim 20, wherein a portion of the media screen remains visible despite the substantial covering of the media screen for the display of additional information to a user.

22. A portable media player according to claim 20, wherein said at least one wing includes user interface controls for controlling said portable media player.

23. A portable media player according to claim 20, wherein at least one of (1) a wing of the at least one wing is interchangeable with an alternate wing, wherein the alternate wing provides alternate functionality and (2) the functionality provided by a wing of the at least one wing is augmentable with a sleeve, wherein the sleeve provides alternate functionality.

24. A portable media player according to claim 23, wherein alternate functionality includes at least one of noise reduction/cancellation, Bluetooth headphone accommodation, microphone input, TV input, TV output, left handed switching of functionality, remote control functionality and a speaker.

25. A portable media player according to claim 20, wherein the bottom surface of the at least one wing is angled greater than 5 degrees from planar normal.

26. A portable media player according to claim 20, wherein said at least one wing is two wings that slide outward from the media screen to reveal the media screen in the open position, and wherein the two wings operate as a stand for the portable media player.

27. A portable media player according to claim 20, including a synchronization component that is operable to synchronize with a docking station whether said at least one wing is in the open or closed position.

28. At least one interchangeable wing for a portable media player having a media screen, including:
a first sliding mechanism for engaging a second sliding mechanism of the portable media player, the first and second sliding mechanisms together enabling sliding of the at least one interchangeable wing to a closed position wherein the media screen is substantially hidden and for sliding the at least one interchangeable wing to an open position wherein the media screen is revealed.

29. At one sleeve operatively coupled to at least one augmentable wing for a portable media player having a media screen wherein said at least one augmentable wing includes a sliding mechanism for sliding the at least one augmentable wing to a closed position wherein the media screen is substantially hidden and for sliding the at least one augmentable wing to an open position wherein the media screen is revealed and wherein said at least one sleeve operatively coupled to said at least one augmentable wing augments the functionality of said portable media player through said operative coupling.

30. A method for switching among at least two modes in a media device having a media screen for displaying data relating to media content, modes of operation of the media device including a first mode for interacting with the media device when the media content relates to music and a second mode for interacting with the media content when the media content relates to image content, comprising:
moving at least one component from a second position corresponding to the second mode to a first position corresponding to the first mode, whereby the media screen of the media device thereby moves from being substantially exposed to view to being substantially shielded from view.

31. A method according to claim 30, wherein said second mode is for interacting with at least one of video content and image content.

32. A method according to claim 30, whereby, as a result of the moving to the first position, the media screen of the media device becomes substantially shielded from view, but nonetheless a portion of the media screen remains unshielded from view.

33. A method according to claim 32, wherein the unshielded portion of the media screen displays at least one of metadata relating to music being rendered and advertising.

34. A method according to claim 30, further comprising interacting with the media content via a plurality of user interface controls of said at least one component.

35. A method according to claim 34, wherein said interacting includes interacting with at least one of Escape, Start, Options, More, OK, Back, Forward, Play, Pause, Up, Down, Fast Forward, Reverse, Skip Forward, Skip Backwards, Menu, Left, Right, Mute, Volume Up and Volume Down functional controls.

36. A method according to claim 34, further including swapping said at least one component with at least one alternate component.

37. A method according to claim 36, wherein said swapping exposes a different set of user interface controls than provided by said at least one component.

38. A method according to claim 34, further including augmenting said at least one component with at least one alternate component.

39. A method according to claim 38, wherein said augmenting at least one of (A) exposes additional user interface controls not provided by said at least one component alone and (B) alters the functionality of said plurality of user interface controls.

40. A method according to claim 30, wherein said moving includes moving a first component and a second component, wherein the first and second components substantially surround opposing ends of the media device, and wherein said moving includes moving the first and second components substantially towards the middle of the media device from their respective ends.

41. A method according to claim 30, further including synchronizing the media device via a synchronization component of the media device adapted to synchronize with a docking station whether said at least one component is in the first position or the second position.

42. A method according to claim 30, wherein said moving includes moving at least one of (A) a first component including the media screen relative to a second component about at least one roller component and (B) the second component relative to the first component about the at least one roller component, wherein said first component and said second component are pivotable about an axis substantially defined by the longitudinal axis of said at least one roller component, whereby said second component substantially covers said first component.

43. A method according to claim 30, wherein said moving includes moving at least one of (A) a first component including the media screen relative to a second component about at least one roller component and (B) the second component relative to the first component about the at least one roller component, wherein said at least one roller component substantially operates as a hinge for said first component and said second component about which the first and second component pivot, further including:
interacting with the media content via at least one user interface control of said at least one roller component, said interacting including at least one of (A) turning the at least one roller component substantially about a longitudinal axis of said at least one roller component, (B) sliding the at least one roller component substantially along the longitudinal axis and (C) receiving a selection of a button control on an end of the at least one roller component.

44. A method according to claim 30, wherein said moving includes moving at least one of (A) a first component including the media screen relative to a second component about at least one roller component and (B) the second component relative to the first component about the at least one roller component, wherein said first component and said second component are pivotable about an axis substantially defined by the longitudinal axis of said at least one roller component, whereby said second component substantially covers said first component.

45. A method according to claim 30, wherein said moving includes moving a wallet structure wherein the media screen is inside the wallet structure, and said moving includes closing the wallet structure such that media screen is shielded.

46. A computer readable medium comprising computer executable modules having computer executable instructions for carrying out the method of claim 30.

47. A computing device comprising means for performing the method of claim 30.

48. A modulated data signal carrying computer executable instructions for performing the method of claim 30.

49. A computing device including a user interface for switching among at least two modes in a media device having a media screen for displaying data relating to media content, modes of operation of the media device including a first mode for interacting with the media device when the media content relates to music and a second mode for interacting with the media content when the media content relates to image content, comprising:
means for moving at least one component from a second position corresponding to the second mode to a first position corresponding to the first mode, whereby the media screen of the media device thereby moves from being substantially exposed to view to being substantially shielded from view, wherein when said at least one component is moved to the first position, a portion of the media screen remains unshielded from view.
